# EUROPEAN PATENT SPECIFICATION

(11) **EP 3 766 230 B1**
(45) Date of publication and mention of the grant of the patent: **07.04.2021**
(21) Application number: 20729388.7
(22) Date of filing: 07.05.2020
(51) Int. Cl.: H04L 29/06

(54) **SYSTEMS AND METHODS FOR PROCESSING CONTENT ITEM OPERATIONS BASED ON FRAUD RESISTENT DEVICE IDENTIFIERS SYSTEMS AND METHODS FOR PROCESSING CONTENT ITEM OPERATIONS BASED ON FRAUD RESISTENT DEVICE IDENTIFIERS**
SYSTEME UND VERFAHREN ZUR VERARBEITUNG VON INHALTSELEMENTOPERATIONEN BASIEREND AUF IDENTIFIKATORSYSTEMEN EINER BETRUGSVERHINDERUNGSVORRICHTUNG UND VERFAHREN ZUR VERARBEITUNG VON INHALTSELEMENTOPERATIONEN BASIEREND AUF IDENTIFIKATOREN EINER BETRUGSVERHINDERUNGSVORRICHTUNG
SYSTÈMES ET PROCÉDÉS POUR LE TRAITEMENT D'OPÉRATIONS D'ÉLÉMENTS DE CONTENU SUR LA BASE D'IDENTIFIANTS DE DISPOSITIFS RÉSISTANTS À LA FRAUDE

(30) Priority: 13.05.2019 US 201962847016 P; 08.08.2019 US 201916536174
(43) Date of publication of application: 20.01.2021
(73) Proprietor: Google LLC, Mountain View, CA 94043 (US)
(72) Inventor: WANG, Gang, Mountain View California 94043 (US); YUNG, Marcel, Mountain View California 94043 (US)
(74) Representative: Roy, Arun Benjamin
(86) International application number: PCT/US2020/031899
(87) International publication number: WO 2020/231743

(56) References cited:
- US-A1- 2010 122 082
- US-A1- 2015 200 934

## Description

### CROSS-REFRENCE TO RELATED APPLICATIONS

This application claims priority to United States Patent Application No. 16/536,174, filed on August 8, 2019, which itself claims priority to United States Provisional Patent Application No. 62/847,016, filed May 13, 2019.

### BACKGROUND

In a computer networked environment such as the internet, third-party content providers provide third-party content items for display on end-user computing devices. These third-party content items, for example, advertisements, can be displayed on a web page associated with a respective publisher. These third-party content items can include content identifying the third-party content provider that provided the content item. US 2015/200934 A1 discloses that the integrity of a computing device may be verified using a known public key of a cryptographic module that is accessible from a trusted third party. US 2010/122082 A1 discloses an identity validation system and method for the Internet which provides user accountability while supporting user privacy to counter SPAM, Internet vandalizers, and predators, as well as cyber bullies who use the Internet to communicate with actual or potential victims.

### SUMMARY

At least one aspect is directed to processing content item operations. The method includes receiving, by a data processing system including one or more processors, from a computing device, a first content item communication, the content item communication including a first content item device identifier and an attestation token including a public key associated with the computing device, an attestation token time stamp, a message payload, and a digital signature. The method further includes verifying, by the data processing system, the digital signature using the public key, the time stamp and the message payload. The method also includes generating, by the data processing system, a second content item device identifier based on a crypto-hash of the public key. The method further includes determining, by the data processing system, that the second content item device identifier matches the first content item device identifier. The method also includes processing, by the data processing system, responsive to verifying the digital signature and responsive to determining that the second content item device identifier matches the first content item device identifier, the first content item communication based on the message payload.

In some implementations, the message payload including a request to wipe-out user data stored in a database at the data processing system. The method further includes determining, by the data processing system, that the time stamp has a value within a predetermined range of temporal values. The method also includes determining, by the data processing system, that the content item communication is valid based on verifying the digital signature, and on the determination that the time stamp has a value within the predetermined range of temporal values. The method further includes accessing, by the data processing system, responsive to determining that the content item communication is valid, the database to wipe-out data associated with the content item device identifier.

In some implementations, the message payload including a content item request and a set of parameters associated with a request for a content item. The method further includes determining, by the data processing system, that the time stamp has a value within a predetermined range of temporal values. The method further includes determining, by the data processing system, that values of the set of parameters match stored parameters. The method further includes selecting, by a data processing system, responsive to determining that the time stamp has a value within the predetermined range of temporal values and determining that values of the set of parameters match stored parameters, a content item and sending the content item to a client device associated with the received content item operation.

In some implementations the message payload including an application installation notification indicating that an application has been installed on a client device. The method further includes determining, by the data processing system, that the time stamp has a value within a predetermined range of temporal values. The method also includes updating, by the data processing system, based on the determination that the time stamp has a value within a predetermined range of temporal values, a database to update a credit value associated with a content item.

In some implementations, the content item device identifier uniquely identifying a client device from which the content item communication is received. In some implementations, the content item device identifier having a length of 16 bytes.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1 is a block diagram depicting an implementation of an environment for managing fraud resistant content item operations.
FIG. 2 shows a block diagram depicting an example implementation of a client device 125, according to an illustrative implementation.
FIG. 3 shows a flow diagram of an example process for the generation of a content item device identifier, according to an illustrative implementation.
FIG. 4 shows a representation of an attestation token generated by the attestation token generator shown in FIG. 2.
FIG. 5 shows a flow diagram of an example process that can be implemented to mitigate fraudulent data wipe-out requests, according to an illustrative implementation.
FIG. 6 shows a flow diagram of an example process that can be implemented to mitigate fraudulent content item requests received by the data processing system shown in FIG. 1, according to an illustrative implementation.
FIG. 7 shows a flow diagram of an example process that can be implemented to mitigate fraudulent application install notifications received by the data processing system 11 shown in FIG. 1, according to an illustrative implementation.
FIG. 8 shows the general architecture of an illustrative computer system that may be employed to implement any of the computer systems discussed herein.

### DETAILED DESCRIPTION

Following below are more detailed descriptions of various concepts related to, and implementations of, methods, apparatuses, and systems of managing fraud resistant content item operations. The various concepts introduced above and discussed in greater detail below may be implemented in any of numerous ways, as the described concepts are not limited to any particular manner of implementation.

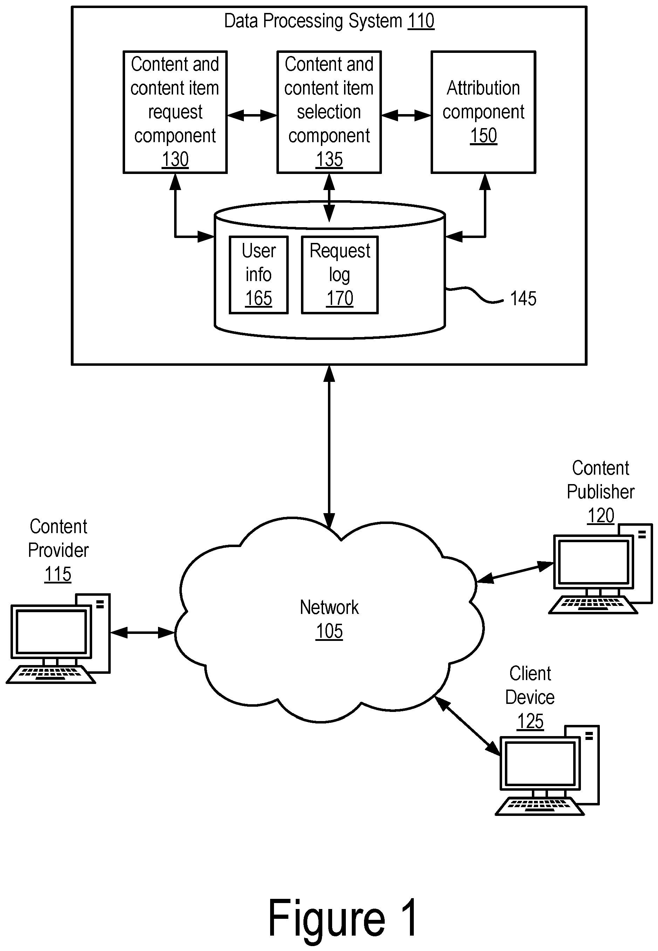

FIG. 1 is a block diagram depicting one implementation of an environment 100 for managing fraud resistant content item operations. The environment 100 includes at least one data processing system 110. The data processing system 110 can include at least one processor (or a processing circuit) and a memory. The memory stores processor-executable instructions that, when executed on the processor, cause the processor to perform one or more of the operations described herein. The processor can include a microprocessor, application-specific integrated circuit (ASIC), field-programmable gate array (FPGA), etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, read-only memory (ROM), random-access memory (RAM), electrically-erasable ROM (EEPROM), erasable-programmable ROM (EPROM), flash memory, optical media, or any other suitable memory from which the processor can read instructions. The instructions can include code from any suitable computer-programming language. The data processing system 110 can include one or more computing devices or servers that can perform various functions. In some implementations, the data processing system 110 can include an advertising auction system configured to host auctions. In some implementations, the data processing system 110 does not include the advertising auction system but is configured to communicate with the advertising auction system via the network 105.

The network 105 can include computer networks such as the internet, local, wide, metro or other area networks, intranets, satellite networks, other computer networks such as voice or data mobile phone communication networks, and combinations thereof. The data processing system 110 of the environment 100 can communicate via the network 105, for instance with at least one content provider computing device 115, at least one content publisher computing device 120, or at least one client device 125. The network 105 may be any form of computer network that relays information between the client device 125, data processing system 110, and one or more content sources, for example, web servers, advertising servers, amongst others. For example, the network 105 may include the Internet and/or other types of data networks, such as a local area network (LAN), a wide area network (WAN), a cellular network, satellite network, or other types of data networks. The network 105 can also include any number of computing devices (e.g., computer, servers, routers, network switches, etc.) that are configured to receive and/or transmit data within network 105. The network 105 can further include any number of hardwired and/or wireless connections. For example, the client device 125 can communicate wirelessly (e.g., via WiFi, cellular, radio, etc.) with a transceiver that is hardwired (e.g., via a fiber optic cable, a CAT5 cable, etc.) to other computing devices in network 105.

The content provider computing devices 115 can include servers or other computing devices operated by a content provider entity to provide content items such as advertisements for display on information resources at the client device 125. The content provided by the content provider computing device 115 can include third-party content items or creatives (e.g., ads) for display on information resources, such as a website or web page that includes primary content, e.g. content provided by the content publisher computing device 120. The content items can also be displayed on a search results web page. For instance, the content provider computing device 115 can provide or be the source of advertisements ("ads") or other content items for display in content slots of content web pages, such as a web page of a company where the primary content of the web page is provided by the company, or for display on a search results landing page provided by a search engine. The content items associated with the content provider computing device 115 can be displayed on information resources other than web pages, such as content displayed as part of the execution of an application (such as a gaming application, global positioning system (GPS) or map application or other types of applications) on a smartphone or other client device 125.

The content publisher computing devices 120 can include servers or other computing devices operated by a content publishing entity to provide primary content for display via the network 105. For instance, the content publisher computing device 120 can include a web page operator who provides primary content for display on the web page. The primary content can include content other than that provided by the content publisher computing device 120, and the web page can include content slots configured for the display of third party content items (e.g., ads) from the content provider computing devices 115. For instance, the content publisher computing device 120 can operate the website of a company and can provide content about that company for display on web pages of the website. The web pages can include content slots configured for the display of third-party content items such as ads of the content provider computing device 115. In some implementations, the content publisher computing device 120 includes a search engine computing device (e.g. server) of a search engine operator that operates a search engine website. The primary content of search engine web pages (e.g., a results or landing web page) can include results of a search as well as third party content items displayed in content slots such as content items from the content provider computing device 115. In some implementations, the content publisher computing device 120 can include a server for serving video content.

The client devices 125 can include computing devices configured to communicate via the network 105 to display data such as the content provided by the content publisher computing device 120 (e.g., primary web page content or other information resources) and the content provided by the content provider computing device 115 (e.g., third party content items such as ads configured for display in a content slot of a web page). The client device 125, the content provider computing device 115, and the content publisher computing device 120 can include desktop computers, laptop computers, tablet computers, smartphones, personal digital assistants, mobile devices, consumer computing devices, servers, clients, digital video recorders, a set-top box for a television, a video game console, or any other computing device configured to communicate via the network 105. The client devices 125 can be communication devices through which an end-user can submit requests to receive content. The requests can be requests to a search engine and the requests can include search queries. In some implementations, the requests can include a request to access a web page.

The content provider computing devices 115, the content publisher computing device 120 and the client devices 125 can include a processor and a memory, i.e., a processing circuit. The memory stores machine instructions that, when executed on the processor, cause the processor to perform one or more of the operations described herein. The processor can include a microprocessor, application-specific integrated circuit (ASIC), field-programmable gate array (FPGA), etc., or combinations thereof. The memory can include, but is not limited to, electronic, optical, magnetic, or any other storage or transmission device capable of providing the processor with program instructions. The memory may further include a floppy disk, CD-ROM, DVD, magnetic disk, memory chip, ASIC, FPGA, read-only memory (ROM), random-access memory (RAM), electrically-erasable ROM (EEPROM), erasable-programmable ROM (EPROM), flash memory, optical media, or any other suitable memory from which the processor can read instructions. The instructions can include code from any suitable computer-programming language.

The content provider computing devices 115, the content publisher computing devices 120, and the client devices 125 can also include one or more user interface devices. In general, a user interface device refers to any electronic device that conveys data to a user by generating sensory information (e.g., a visualization on a display, one or more sounds, etc.) and/or converts received sensory information from a user into electronic signals (e.g., a keyboard, a mouse, a pointing device, a touch screen display, a microphone, etc.). The one or more user interface devices can be internal to a housing of the content provider computing devices 115, the content publisher computing device 120 and the client devices 125 (e.g., a built-in display, microphone, etc.) or external to the housing of content provider computing devices 115, the content publisher computing device 120 and the client devices 125 (e.g., a monitor connected to the user computing device 115, a speaker connected to the user computing device 115, etc.), according to various implementations. For example, the content provider computing devices 115, the content publisher computing device 120 and the client devices 125 can include an electronic display, which visually displays web pages using webpage data received from one or more content sources and/or from the data processing system 110 via the network 105. In some implementations, a content placement campaign manager or third-party content provider, such as an advertiser, can communicate with the data processing system 110 via the content provider computing devices 115. In some implementations, the advertiser can communicate with the data processing system 110 via a user interface displayed on the user interface devices of the content provider computing devices 115.

The data processing system 110 can include at least one server. For instance, the data processing system 110 can include a plurality of servers located in at least one data center or server farm. In some implementations, the data processing system 110 can include a third-party content placement system, e.g., an ad server or ad placement system. The data processing system 110 can include at least one content request component 130, at least one content selection component 135, at least one attribution component 150 and at least one database 145. The content request component 130, the content selection component 135 and attribution component 150 each can include at least one processing unit, server, virtual server, circuit, engine, agent, appliance, or other logic device such as programmable logic arrays configured to communicate with the database 145 and with other computing devices (e.g., the content provider computing device 115, the content publisher computing device 120, or the client device 125) via the network 105.

The content request component 130, the content selection component 135, and the attribution component 150 can include or execute at least one computer program or at least one script. The content request component 130, the content selection component 135, and the attribution component 150 can be separate components, a single component, or part of the data processing system 110. The content request component 130, the content selection component 135, and the attribution component 150 can include combinations of software and hardware, such as one or more processors configured to execute one or more scripts.

The data processing system 110 can also include one or more content repositories or databases 145. The databases 145 can be local to the data processing system 110. In some implementations, the databases 145 can be remote to the data processing system 110 but can communicate with the data processing system 110 via the network 105. The databases 145 can include web pages, portions of webpages, third-party content items (e.g., advertisements), and content slot insertion script, among others, to serve to a client device 125. In some implementations, the database 145 also can include user information stored in relation to a content item device identifier (discussed below), and request logs that store content item requests associated with content item device identifier of client devices.

The content request component 130 can receive a request for content from the client device 125. The request for content can include a request for an information resource, a request for one or more third-party content items, a request for a content slot insertion script or a combination thereof. In some implementations, the request for content can include a request for third-party content. In some implementations, the request for third-party content can include an address or identifier of an information resource on which the third-party content is to be displayed. The request for third-party content can also include or identify one or more parameters that can be used by the data processing system 110 to determine the content to provide in response to the request for content. The parameters can identify a size of a content slot within which to insert the requested content. The parameters can identify a type of content associated with the information resource, a type of third-party content requested (e.g., text, image, video, etc.), client device information, size information for requested third-party content item or a combination thereof. In some implementations, the request can identify a content slot insertion script. In some implementations, the request for content can include an identifier indicating that the content publisher of the resource information is subscribed to or has otherwise opted in to a content slot insertion service.

In some implementations, the request for content can include a request for an information resource. The request for an information resource can include an address or identifier of the information resource. For example, the request for the information resource can include a Uniform Resource Locator (URL) of a specific resource such as a webpage (e.g., "http://www.example.com"). The request for information resource can also include client device information (such as a device type, device identifier or a combination thereof).

In some implementations, the request for content can include a request for a content slot insertion script. In some implementations, the request for the content slot insertion script can include an indication of the requested script, an address or identifier of a resource information or a combination thereof. In some implementations, the request for the content slot insertion script can identify a content slot insertion script. In some implementations, the request for the content slot insertion script can include an identifier indicating that the content publisher of the resource information is subscribed to or has otherwise opted in to a content slot insertion service. In some implementations, the content request component 130 can be configured to parse the request for content and determine to forward the request for content to the content selection component 135 or to the script provider component. For instance, if a content slot insertion script is determined to be sent to the client device 125 in response to the received request for content, the content request component 130 can forward the request for content to a script provider component. Otherwise, the content request component 130 can forward the request for content to the content selection component 135. In some implementations, the content request component 130 can determine to forward the request for content to both the content selection component 135 and the script provider component. The content request component 130 can determine whether or not a script is to be sent to the client device 125 based on the type of the request for content (e.g., a request for an information resource, a request for third-party content or a request for a content slot insertion script), an indicator in the content request (e.g., an indicator indicative of a content slot insertion script or an indicator indicating that an information resource is eligible for content slot insertion), an information resource identifier in the request for content or a combination thereof. In some implementations, the content request component 130 can determine whether or not a script is to be sent to the client device 125 by comparing an identification of the information resource to a list of information resource identifiers (e.g., resource information identifiers eligible for receiving the content slot insertion script). In some implementations, the information resource identifier can be a URL. In some implementations, the information resource identifier can be a domain to which the information resource belongs. In some implementations, the information resource identifier can be an IP address corresponding to a server hosting the information resource. In some implementations, the content request component 130 can automatically forward the request for content to the content selection component 135 without checking whether or not a script is to be sent to the client device 125.

The content selection component 135 can be configured to determine content to be transmitted to the client device 125 in response to a received request for content. The content selection component 135 can determine the content to be sent to the client device 125 based on information included in the request for content. For instance, upon receiving a request for an information resource, the content selection component 135 can use the address or identifier of the information resource in the request for content to determine the content to send to the client device.

In the case of receiving a request for one or more third-party content items, the content selection component 135 can select the third-party content item(s) based on an address or identifier for the information resource on which the third-party content item is to be presented, content type information (e.g., sports, news, music, movies, travel, etc.) for the information resource, size information of the slot(s) in which the third-party content item(s) is/are to be displayed, client device information (e.g., device type, device identifier, device location, etc.). In some implementations, the request for the content item may also include a content item device identifier that is uniquely generated for the client device 125 for purposes of content item transactions. For example, the content item device identifier can include an advertising identifier (ADID), utilized in Android supported devices, identifier for advertisers (IDFA), utilized in Apple supported devices, or any other identifier that advertisers can utilize to identify the user. The content item device identifier can be different from a unique device identifier (UDID) that is associated with the client device 125. For example, the content item device identifier allows content item providers to track activity related to content item device identifier, similar to tracking activity related to UDID. However, unlike UDID, the tracking of which a user cannot not turn off, a user can readily turn off tracking of activity based on the content item device identifier. Further, unlike a UDID, which is unique to the client device 125 and whose exposure is typically not controllable by the user using the client device 125, the content item device identifier can be unique as well as user-resettable. This allows the user to opt out of targeted content item delivery based on the content item device identifier by setting desired tracking preferences. The content item device identifier can be changed by the user and can be common across multiple devices associated with the user. A request for a content item received by the content selection component 135 can include the content item device identifier, which the content selection component 135 can utilize, based for example, on past activity related to the content item device identifier, to select a content item to be presented at the client device 125.

In some implementations, the request for third-party content can also include a minimum revenue amount (or minimum bid value) for displaying a third-party content item on the information resource. In some implementations, the content selection component 135 can communicate with an advertising auction system and provide the advertising auction system information included in the request for third-party content received from the client device. The content selection component 135 can also receive one or more third-party content items from the advertising auction system responsive to providing the information included in the request for third-party content. In some implementations, the content selection component 135 can access the database 145 and retrieve the content for sending to the client device 125.

In some implementations, the content selection component 135 can be configured to determine whether or not a script is to be sent to the client device 125 in response to the request for content. The content selection component 135 can determine whether or not a script is to be sent to the client device 125 based on the type of the content request (e.g., a request for an information resource, a request for third-party content or a request for a content slot insertion script), an indicator in the request for content (e.g., an indicator indicative of a content slot insertion script or an indicator indicating that an information resource is eligible for content slot insertion), an information resource identifier in the request for content or a combination thereof. In some implementations, the content selection component 135 can determine whether or not a script is to be sent to the client device 125 by comparing an identification of the information resource to a list of information resource identifiers (e.g., information resource identifiers eligible for receiving the content slot insertion script). Upon determining that a script is to be sent to the client device 125, the content selection component 135 can forward the request for content or an indication thereof to a script provider component. In some implementations, the content selection component 135 can still select a third-party content item to send to the client device 125 along with a script, such as the content slot insertion script.

The attribution component 150 can process requests for attributions such as, for example, application installation claim requests and application install credit claim requests. In some implementations, content items can be served by applications executing on the client device 125. The application rendering the content items on the client device can include a software development kit (SDK) that can monitor interaction with the content item. For example, if the content item rendered on the client device 125 is clicked on by the user, the SDK can send a notification to a content item network that created the content item that the user clicked on the content item at the client device 125. The content item, for example, can include a message or provide the user a link to install an application on the client device 125. When the user installs the application on the client device 125, the application can include an attribution SDK that can send a notification to the attribution component 150 indicating that the application was installed on the client device 125. The attribution component 150, as part of a content item campaign, can query multiple content item networks to determine whether the application installed on the client device 125 was facilitated by a content item created by the respective content item network. The appropriate content item network can respond with a request for credit. Both the application installation notification from the attribution SDK and the credit request from the content item network can include attestation tokens (discussed below), which the attribution component 150 can utilize to mitigate fraudulent installation notifications and fraudulent credit requests.

The data processing system 110 can mitigate various fraudulent transaction involving content item device identifier. For example, fraudulent transactions can broadly involve content item targeting, attribution, and user data transparency and control. Fraudulent content item targeting can include requests with hijacked content item device identifiers, and requests with fraudulent request parameters other than the content item device identifier. In some instances, some entities may generate fraudulent content item device identifiers and send requests to the content request component 130. This can increase the load on the data processing system 110, affecting performance. In some implementations, some entities may modify parameters other than content item device identifier, such as, for example, application name for in-app requests, URLs for web requests, etc., in the requests sent to the content request component 130. In such scenarios, the data processing system 110 may process the requests even though the request is fraudulent, affecting the performance of the data processing system 110.

Fraudulent attribution can include fraudulent application install credit claims and fraudulent application install notifications. In some implementations, after an application is installed on the client device 125, the first time the application is launched on the client device 125 causes an attribution SDK embedded in the application to send an attribution request to the attribution component 150. In response to receiving the attribution request, the attribution component 150 can query multiple content item networks, such as the content provider 115, to determine the content item network that should be credited for the installation of the application. In some implementations, the attribution can be based on a last click model. Some fraudulent content item networks may send fraudulent credit requests to the attribution component 150. In some such instances, the data processing system 110 may process the credit request even though the request is fraudulent, and credit the fraudulent content item network, thereby negatively affecting the performance of the data processing system 110.

In some other implementations, a fraudulent entity may send fraudulent application installation notifications to the attribution component 150. That is, the entity may send notifications of application installation even though no applications were installed on the client device 125. The fraudulent entities may be driven to send a large number of notifications if there are financial incentives associated with the number of installations. The data processing system 110 may process these notifications, such as for example, generating queries to content item networks for each notification even though the notifications may be fraudulent, thereby negatively affecting the performance of the data processing system 110.

In some implementations, fraudulent entities may compromise the integrity of user data 165 stored on the data processing system 110 by sending fraudulent wipe-out requests. A fraudulent entity may hijack the content item device identifier of the client device 125 and send a data wipe-out request to the data processing system 110 unbeknownst to the client device 125. This may cause the data processing system 110 to illegitimately wipe-out the user data associated with the client device 125, thereby affecting the integrity of the data stored at the data processing system 110. Further as the data processing system 110 is processing the fraudulent request, the performance of the data processing system 110 may be negatively affected. In some other instances, the fraudulent entity may collect content item device identifiers (which are public) of several client devices 125 and send fraudulent requests to the data processing system to provide the user information in the possession of Data Processing System 110 that is associated with the content item device identifiers. Again, the request may be made without the authorization of the client devices, such as the client device 125, and may negatively impact the integrity of the data stored at, and negatively impact the performance of, the data processing system 110.

In some implementations, a fraudulent entity may send requests to the data processing system 110 with fraudulently modified parameters other than the content item device identifiers, where the parameters can include application name for in-application requests, URL of web requests, etc. The fraudulent entity's motivation to do so may be for illegitimate financial gains, however, the integrity of the data stored in the data processing system 110 as well as the performance of the data processing system 110 may be negatively impacted.

As discussed herein, the negative impact on data integrity and performance by above discussed fraudulent scenarios can be mitigated by using a content item device identifier that has self-attestation capability, where the data processing system 110 can ascertain that the content item device identifier received in a request or a notification is legitimately associated with the purported client device 125. Further, integrity features can be incorporated in the requests and notifications such that any fraudulent modification or alteration of the requests or notifications can be detected by the data processing system 110.

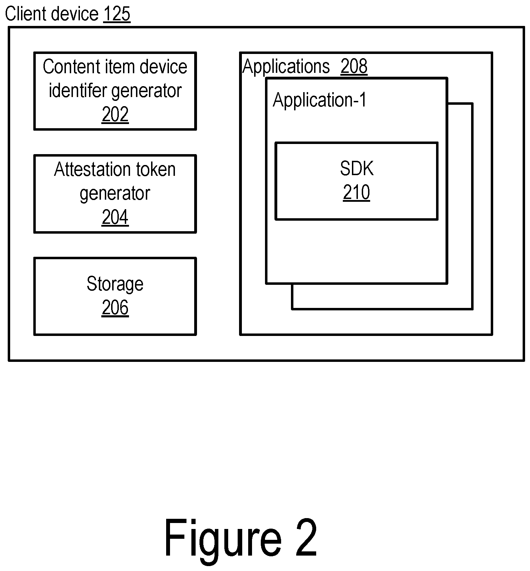

FIG. 2 shows a block diagram depicting an example implementation of a client device 125. The client device 125 can include a content item device identifier generator 202, an attestation token generator 204, and storage 206. In addition, the client device 125 can run third party applications 208, at least one of which can include an SDK 210, such as, for example, an attribution SDK, which can send installation notifications to the data processing system 110. In some implementations, the content item device identifier generator 202 can be executed by an operating system of the client device 125, where example operating systems can include, without limitation, Android operating system, and iOS operating system. In some implementations, the content item device identifier generator 202 can be an application programming interface provided by the operating system which applications 208 can interface with to request generation of the content item device identifier. In some implementations, each time an application 208 sends a request or a notification to the data processing system 110, the application 208 may have to include a content item device identifier of the client device 125 in the request or the notification. The application 208 may request the content item device identifier generator 202 to generate the content item device identifier, which can then be included in the request or the notification sent to the data processing system 110.

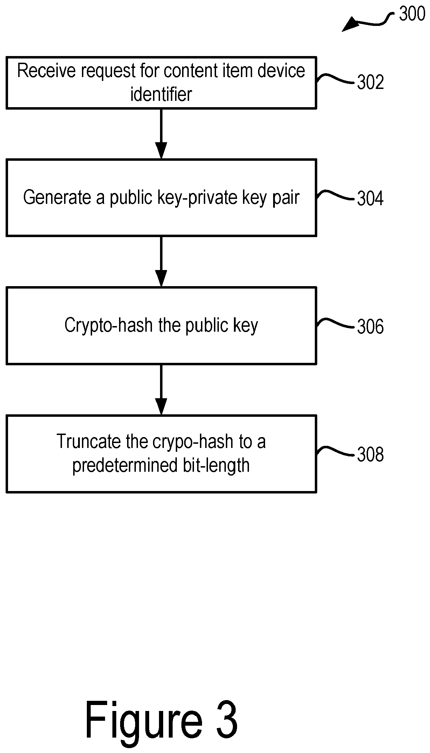

FIG. 3 shows a flow diagram of an example process 300 for the generation of a content item device identifier. In particular, the process 300 can be executed by the content item device identifier generator 202 shown in FIG. 2. The process 300 includes receiving a request for a content item device identifier (302), generating a public key-private key pair, if not already generated (304), crypto-hashing the public key (306), and truncating the crypto-hash to a predetermined bit-length (308) as needed.

The content item device identifier generator 202 can receive a request to generate a content item device identifier from an application, such as one of the applications 208 (302). The request to generate the content item device identifier can be due to a notification or a request that the application 208 or an SDK 210 intends to send to the data processing system 110. In some instances, the application 208 or the SDK 210 can call an API (e.g., getId()) in an Android operating system) provided by the operating system of the client device 125 to request for the content item device identifier. In systems that do not incorporate fraud mitigation techniques discussed herein, the content item device identifier is stored in storage 206 of the client device 125. Upon receiving a request from the application 208 or the SDK 210, the operating system simply accesses the content item device identifier from storage 206 and provides the content item device identifier to the application 208 or the SDK 210. The stored content item device identifier can be randomly generated and can be unique to the user or the client device 125. The content item device identifier can also have a fixed bit-length, of say 16 bytes. The content item device identifier can have a string format that includes alpha-numeric symbols. As mentioned above, the content item device identifier can be resettable by the user. As the content item device identifier can be a randomly generated value, this renders transactions that rely on the content item device identifier to be vulnerable to fraudulent use. For example, the application 208 or SDK 210 may include an illegitimate content item device identifier that is different from the content item device identifier stored in storage 206. In contrast, the content item device identifier generator 202 relies on including specific information into the content item device identifier, such as generating the content item device identifier that is a function of a public key associated with a private key of the client device 125.

The content item device identifier generator 202 can generate a public key-private key pair (304). A public key-private key pair can include a public key Key_{public} and a Keyₚᵣᵢᵥₐₜₑ generated based on an asymmetric key technique, such as, for example, the RSA encryption algorithm, an elliptical curve algorithm, or any other such asymmetric key generation technique. One aspect of the generation of the public key-private key pair is that the content item device identifier generator 202 does not rely on an external certification authority to generate the key pairs. A certification authority is an entity that issues digital certificates that certifies the ownership of a public key by the named subject of the certificate. Instead, no trusted party is needed. The Key_{public} and Keyₚᵣᵢᵥₐₜₑ generated by the content item device identifier generator 202 can be of sizes such as for example 1028 or 2048 bits (e.g., RSA key lengths), however, any other key size can be utilized. The content item device identifier generator 202 can securely store the private key on the client device 125 in the storage 206 or some other secure storage. In some embodiments, access to the private key can be restricted to the attestation token generator 204. In this manner, the applications running on the client device 125 cannot fraudulently access or modify the private key.

The content item device identifier generator 202 crypto-hashes the public key (306). In some examples, the content item device identifier generator 202 can utilize various cryptographic hash functions to generate the crypto-hash value of the public key. A crypto-hash function is a mathematical algorithm that maps data or an arbitrary size to a bit string of fixed size. As a non-limiting example, the content item device identifier generator 202 can utilize the SHA512/256 algorithm to generate the crypto-hash value of the public key. Thus, the crypto-hash value can be equal to F_{crypto-hash}(Key_{public}).

The content item device identifier generator 202 can truncate the crypto-hash value (308). The truncation function F_{truncate}, can include a function that reduces the length of the crypto-hash value to a bit length that is equal to the length of content item device identifier that do not have fraud resistant capability. Maintaining the length of content item device identifier can allow maintaining backward compatibility of the content item device identifier with system that do not process fraud resistant content item device identifiers. This length can be equal to, for example, 16 bytes long. However, the length of 16 bytes is only an example, and a truncation function of any size can be utilized. In some implementations, the F_{truncate} function can simply eliminate the number of bytes from the crypto-hash value that exceed the target length. For example, the crypto-hash value generated using SHA256 can be 32 bytes long. The F_{truncate} function can eliminate 16 bytes from the crypto-hash value to arrive at the target length of 16 bytes. The truncation of the crypto-hash value can be used as the content item device identifier for the client device 125. Thus, the content item device identifier generator 202 can generate a content item device identifier for the client device 125 by using the function: F_{truncate}(F_{crypto-hash}(Key_{public})). The content item device identifier generator 202 can store the generated content item device identifier in storage 206, and can provide the stored content item device identifier for future requests quickly while minimizing computation cost. In some instances, the content item device identifier generator 202 can execute the process each time the user instructs the client device 125 to change the content item device identifier.

In some embodiments, the content item device identifier can be the same as the public key associated with the public key-private key pair that is generated by the content item device identifier generator 202. Such an identifier can have a length that is a function of the length of the public key. In some such embodiments, the length of the public key can be based on the asymmetric key algorithm being used and the selected key length. For example, the public key for some implementations of the RSA algorithms can be 2048 bits, or 256 bytes, long. In implementations where the length of the content item device identifier is not limited, the public key could be directly used as the content item device identifier. In some embodiments, the content item device identifier can be generated based on a cryptographic function, one example of which includes the hash function discussed above. Here too, the length of the resulting content item device identifier can be a function of the length of the output of the cryptographic function. In some embodiments, content item device identifier generator 202 can generate the content item device identifier by truncating the public key itself, without the application of the cryptographic function, to get the desired length (e.g., 16 bytes).

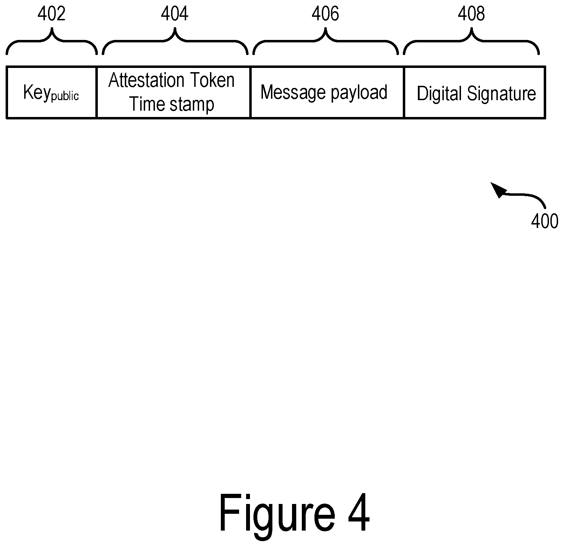

The client device 125, in addition to generating the content item device identifier as discussed above, can also generate an attestation token. FIG. 4 shows a representation of an attestation token 400 generated by the attestation token generator 204 shown in FIG. 2. The attestation token 400 can include multiple concatenated portions. For example, the attestation token 400 can include a public key field 402 (Key_{public}), an attestation token creation time stamp ("time stamp") field 404, a message payload field 406, and a digital signature field 408. The public key field 402 can include the public key Key_{public} generated by the content item device identifier generator 202 and discussed above in relation to FIG. 2 and FIG. 3. In some examples, the public key field 402 can have a bit length that is based on the size of the public key of the particular key generation algorithm used. For example, in some implementations where the RSA algorithm is used, the public key field 402 can be 1024-2048 bits or larger. In some other implementations, where the Elliptical Curve algorithm is used to generate the key pairs, the public key field 402 can be 33 bytes long.

The time stamp field 404 can include a time stamp 'T' of the time when the attestation token 400 is generated by the attestation token generator 204. In some implementations, the attestation token generator 204 can utilize a high resolution time stamp. In some implementations, the attestation token generator 204 can be about 8 bytes long, and can include information such as day, date, or a time (e.g., GMT or some other standard time) when the attestation token is generated. The message payload field 406 can include a message 'M' based on the type of request or notification that is to be sent by the application 208 or the SDK 210 to the data processing system 110. For example, the message payload can include a message {operation: wipe-out} when the application 208 or the SDK 210 send a wipe out request to the data processing system 110. Other example payloads for other requests or notification are discussed further below. The size of the message payload field 406 can vary based on the type of message, the parameters of the message and the encoding scheme selected.

The digital signature field 408 can include the digital signature 'S' that is a digital signature of the other fields of the attestation token. Specifically, the S = Digital Signature (Key_{public}|| T || M). The attestation token generator 204 can generate the digital signature S using any digital signature generation algorithm using the public key, Key_{public}, generated by the client device 125 (FIG. 3, 304). For example, the attestation token generator 204 can generate the digital signature S using algorithms such as RSA based signature schemes (e.g., RSA-PSS), Digital Signature Algorithm (DSA) or its elliptical curve variant ECDSA, Edwards-curve Digital Signature Algorithm, EIGamal signature scheme, etc. The attestation token generator 204 can generate the digital signature of the public key, the time stamp and the message payload arranged in any sequence. That is, relative positions of the public key, the time stamp, and the message payload can be varied. The attestation token generator 204 generates the digital signature so that a recipient can verify that the attestation token 400 was created by the client device 125 and was not altered in transit. Moreover, once the recipient successfully verifies the digital signature, the recipient can be assured that the public key included in the attestation token is also created by the client device 125 and has not been altered in transit.

As mentioned above, the content item device identifier generator 202 generates the content item device identifier using the same public key generated by the client device 125. Thus, the verification of the digital signature S included in the attestation token 400 also verifies that the content item device identifier generated using the same public key is also created by the client device 125 and has not been altered in transit. The recipient can verify the received content item device identifier also by crypto-hashing and truncating the public key included in the verified attestation token 400, and if there is a match, the recipient can be assured that both the attestation token (including the message M, and the time stamp) and the content item device identifier are received from the same client device 125 and have not been altered in transit. In some implementations, the attestation token generator 204 can include additional bits in the attestation token that indicate the start and end of each field. This can aid the data processing system 110 to identify the location and contents of the fields. In some implementations, the size of each field can be preset and fixed. In some embodiments, the attestation token 400 can also include a version field, where each version is can be indicative of a predefined combination of public/private key algorithm and key length, time stamp resolution, digital signature algorithm, encoding scheme, field sizes, etc.

In instances where the data processing system 110 does not implement fraud resistance or detection, the client device 125 can generate the message field without including the other fields shown in FIG. 4. However, in instances where the data processing system 110 does implement fraud resistance or detection, the client device 125 can generate the message that includes the fields shown in FIG. 4 and generate the content item device identifier based on the crypto-hash process discussed above in relation to FIG. 3. It should be noted that for systems that do not implement fraud resistance or fraud detection, such systems can view the content item device identifier as a randomly generated 16 byte value that the systems regularly use as the content item device identifier of the client device.

Generating the content item device identifier and the attestation token in the manner discussed above can have several advantageous features. For example, it may be infeasible for a third party to identify an alternative public key-private key pair for which the truncated crypto-hash value of the public key would be the same as a content item device identifier that the entity may have fraudulently collected on the Internet. Further it may be infeasible for the third party entity to identify a private key that corresponds to the public key embedded in the attestation token 400 collected on the Internet. Thus, the integrity and authenticity of the content item device identifier and attestation token can be strong.

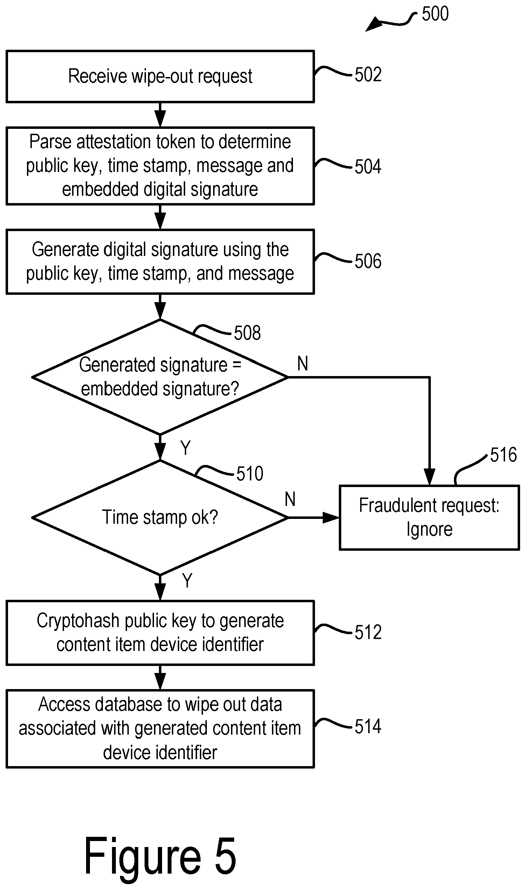

The data processing system 110 can rely on the content item device identifier and the attestation token 400 generated above to implement fraud resistant system. FIG. 5 shows a flow diagram of an example process 500 that can be implemented to mitigate fraudulent data wipe-out requests. As an example, the process 500 can be executed by the content request component 130 shown in FIG. 1. The process 500 includes receiving a wipe-out request from a client device 125. As mentioned above, the data processing system 110 can store user information in the database 145. A user can request the data processing system 110 to wipe-out the data associated with the user's device stored with the data processing system 110. The client device 125 can include an application, such as a browser or an installed application, which can receive an input from the user to send a wipe-out request to the data processing system 110. The application can request the operating system of the client device 125 to provide a content item device identifier and an attestation token corresponding to the wipe-out request. The content item device identifier generator 202 can provide the content item device identifier that was generated based on the truncation of the crypto-hash of the public key. Further, the attestation token generator 204 can provide an attestation token 400 to the application. The attestation token generator 204 can populate the message payload field 406 of the attestation token 400 to indicate that the attestation token has been generated based on the wipe-out request. For example, the attestation token generator 204 can include {operation: wipe-out target-domain: some-company.com} in the message payload field 406, where the target-domain can indicate the domain name of the entity at which the wipe out is requested. The attestation token generator 204 may also store the generated token in storage 206 for a predetermined amount of time. The application 208 or the SDK 210 can send the request, the content item device identifier, and the attestation token to the data processing system 110.

The process 500 further includes parsing the attestation token to determine the public key, the time stamp, the message, and the digital signature (504). The content request component 130, for example, can parse the attestation token 400 to determine the values of each of the fields of the attestation token 400. The content request component 130 can either look for start and end bits that indicate the start and end of each field of the attestation token 400 or if the field length is known based on the type of request, the content request component 130 can fetch the appropriate length bit strings to determine the values of each of the fields.

The process 500 includes verifying a digital signature included in the attestation token 400 using the public key, the time stamp, and the message payload from the attestation token 400 (506). The content request component 130 can utilize the same digital signature algorithm used by the client device 125 to verify the digital signature. The content request component 130 can concatenate the public key, the time stamp, and the message in the same order as that used by the client device 125. The particular ordering of the field values can be predetermined and agreed upon by the attestation token generator 204 and the data processing system 110 beforehand. The content request component 130 can verify the digital signature using the public key included in the public key field 402 of the attestation token 400.

If the digital signature is verified, the content request component 130 can determine that the values of the public key, the time stamp, and the message payload were not tampered with by a fraudulent entity. Potential fraudulent entities may be able to collect a large number of content item device identifiers over the Internet. However, these entities may not be able to access the private key that is securely stored at the client device 125. Therefore, these entities cannot create a wipe-out request and message that has the same digital signature as the one included in the attestation token 400 received from a legitimate client device 125. Thus, verifying the digital signatures can help ascertain that the message received is indeed generated by the device that owns the content item device identifier and is not altered during transmission.

The process 500 includes verifying the time stamp in the attestation token (510). The time stamp can be compared to a current time at the data processing system 110. If the time stamp value is within a reasonable time range of the current time value, the content request component 130 can determine that the time stamp is verified. The reasonable time range can depend upon, for example, the estimated amount of time after the creation of the attestation token that the token is received by the data processing system 110. If the currently received request is merely a replay of the previous request, the time stamp of the request would be out of the reasonable time range. As a result, the content request component 130 can determine that the time stamp is not verified. In addition, content request component 130 can determine that the request is merely a replay of previous request(s), if the received combination of content item device identifier and the time stamp matches a combination stored in the request log 170 for an earlier content request.

The process 500 includes crypto-hashing the public key included in the attestation token to generate a content item device identifier (512). Once the content request component 130 successfully verifies both the digital signature and the time stamp, the content request component 130 can generate the content item device identifier from the public key included in the public key field 402 of the attestation token 400. As mentioned above, the content item device identifier can be generated by a truncation of the crypto-hash of the public key of the client device 125. The content request component 130 can use the same truncation and crypto-hash functions that were used by the client device 125, and generate the content item device identifier. In some implementations, the content request component 130 may also verify whether the generated content item device identifier matches the content item device identifier received with the request. If the generated content item device identifier does not match with the received content item device identifier, the content request component 130 can determine that the request is fraudulent. If the generated content item device identifier matches the content item device identifier received in the request, the content request component 130 can determine that the request is a legitimate request.

The process 500 includes accessing the database to wipe-out data associated with the generated content item device identifier (514). The content request component 130 can access the database 145 to process the wipe-out request. In particular, the content request component 130 may remove any user information 165 associated with the generated content item device identifier stored in the database 145. The data wipe-out request can include sending a command or request to the database 145 with the content item device identifier of the client device 125. The database 145, in turn, initiate a data deletion or wipe-out process to remove the data associated with the content item data identifier in the database 145.

The process 500 includes ignoring the request if the digital signatures do not match and/or the time stamp is not verified and/or the calculated content item device identifier does not match the content item device identifier included in the wipe-out request (516). The content request component 130 can determine that the received request is a fraudulent request if the digital signatures do not match (in step 508) or if the time stamp is not verified (in step 510) or if the calculated content item device identifier does not match the content item device identifier included in the wipeout request. As a result, the content request component 130 can ignore the received request. In this manner, the fraudulent requests are not processed by the data processing system 110, thereby reducing the impact on the performance of the data processing system 110. In particular, for each detected fraudulent request, the content request component 130 avoids sending requests to the database 145 for deleting or wiping out of data associated with the content item device identifier. With potentially hundreds or thousands of fraudulent requests received by the data processing system 110, by avoiding processing fraudulent wipe-out requests, the data processing system 110 can utilize the processing or storage resource that it would otherwise use to processes fraudulent requests, to instead improve performance for legitimate requests.

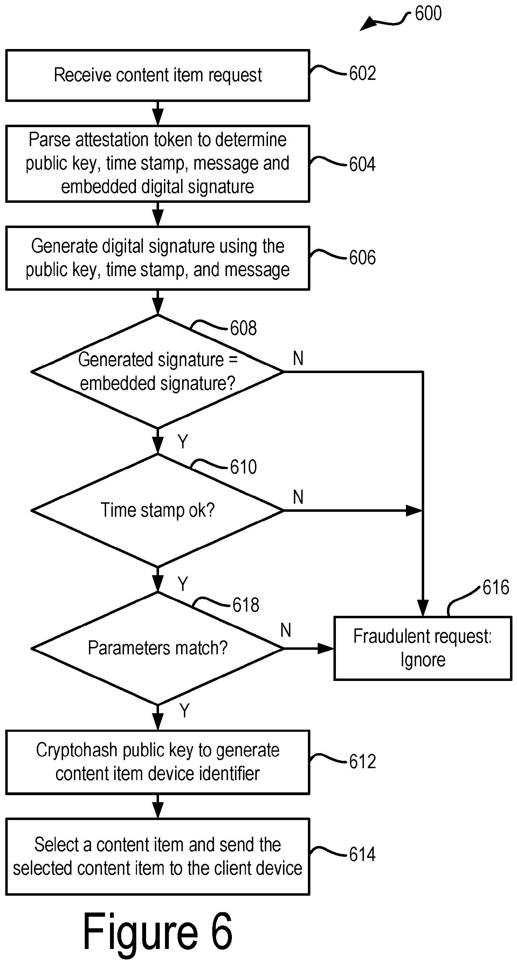

FIG. 6 shows a flow diagram of an example process 600 that can be implemented to mitigate fraudulent content item requests received by the data processing system 110 shown in FIG. 1. As an example, the process 600 can be executed by the content request component 130 of the data processing system 110. The process 600 includes receiving a content item request (602). The content request component 130 can receive the content item request from an application running on the client device 125. For example, a web browser may display content on the client device 125, and may request the data processing system 110 to provide with content items to be rendered along with the displayed content. Prior to sending the request to the data processing system 110, the application 208 can request the content item device identifier generator 202 for a content item device identifier, which when received, can be included in the request to the data processing system 110. The content item device identifier generator 202 can retrieve the content item device identifier stored in storage 206 of the client device 125 and provide the content item device identifier to the application 208. In some instances, where the content item device identifier has not yet been generated or is not stored in storage 206, the content item device identifier generator 202 can generate the public key-private key pair, and generate the content item device identifier based on the truncated crypto-hash of the public key, as discussed above in relation to FIG 3.

The client device 125 can also generate an attestation token based on the request. As an example, the attestation token 400 can be generated in a manner similar to that discussed above in relation to FIGS. 4 and 5. However, the attestation token generator 204 may populate the message payload field 406 based on the content item request. For example, the attestation token generator 204 can include certain parameters that indicate that the attestation token has been generated in response to a content item request, and include an identity of the application making the request. As an example, the attestation token 400 can generate the following payload message: {operation: "content item request", "apk name": <apk name>, "content item request parameters": <parameter identities and values>, "IP address": <IP address of client device>}, where the "operation" variable indicates that the operation is a content item request operation, the "apk name" indicates the name of the application 208 that has made the request, "content item request parameters" can include parameters related to the content item request, and the "IP address" indicates the IP address of the client device 125. In some instances, the operating system can provide an API that can be invoked by the application 208 to create the attestation token. For example, the operating system of the client device 125 can provide an API with the following signature: token SignContentItemRequest (content_item_request_parameters). The application 208 can invoke the above API, and in response the attestation token generator 204 can generate the attestation token with the appropriate message payload. The application 208 can transmit the content item request, the content item device identifier and the attestation token to the data processing system 110.

The process 600 includes parsing the attestation token to determine the public key, the time stamp, and the embedded message, and the digital signature (604). The process stages 604-608 are similar to stages 504-508 discussed above in relation to FIG. 5, except that in the process stage 604, the message payload includes a message corresponding to content item request. The content request component 130 can verify the digital signature and the time stamp included in the attestation token 400. The process 600 includes determining whether the parameters included in the message payload match the actual parameters of the content item request (616). For example, the content request component 130 can determine whether the values of parameters such as, for example, "app name" and "IP address" in the message payload 406 of the attestation token 400 matches the application name and the IP address, respectively, in the request received by the data processing system 110. In some embodiments, the message payload may include a crypto-hash of the parameters instead of the parameters themselves, as the crypto-hash may have a smaller size than the actual parameter values. In such embodiments, the process 600 may decrypt the crypto-hash of the parameter values to determine the parameters included in the message payload. Responsive to the parameters matching, and the signature and the time stamp verified, the content request component 130 can verify the content item device identifier received in the request by generating a crypto-hash and truncation of the public key included in the request (similar to step 510, FIG. 5).

If the generated content item device identifier matches the content item device identifier received in the content item request, the content request component 130 can determine that the content item request is not fraudulent, and initiate the process of selecting a content item and transmitting the selected content item to the client device 125 (612). The selection of the content item can include the content request component 130 sending a request to the content selection component 135 including at least a portion of the information received in the request from the client device 125, such as the content item device identifier, a bid amount, keywords, etc. The content selection component 135 can execute a content item selection process that allows selection of a content item from a plurality of content items based at least on the content item device identifier, the bid amount and the keywords. As an example, the content selection component 135 may also access the user information 165 to determine any user information stored in relation to the content item device identifier, and use the user information to select the content item. The data processing system 110 can also generate and store in the request log 170 an identity of the content item in association with the generated content item device identifier. In some instances, where the content request component 130 determines that the digital signatures do not match, or the time stamp is not verified, or the parameters do not match, the content request component 130 can determine that the received content item request is fraudulent, and should be ignored (614). In this manner, the data processing system 110 can refrain from processing fraudulent content item requests, thereby improving the performance of the system.

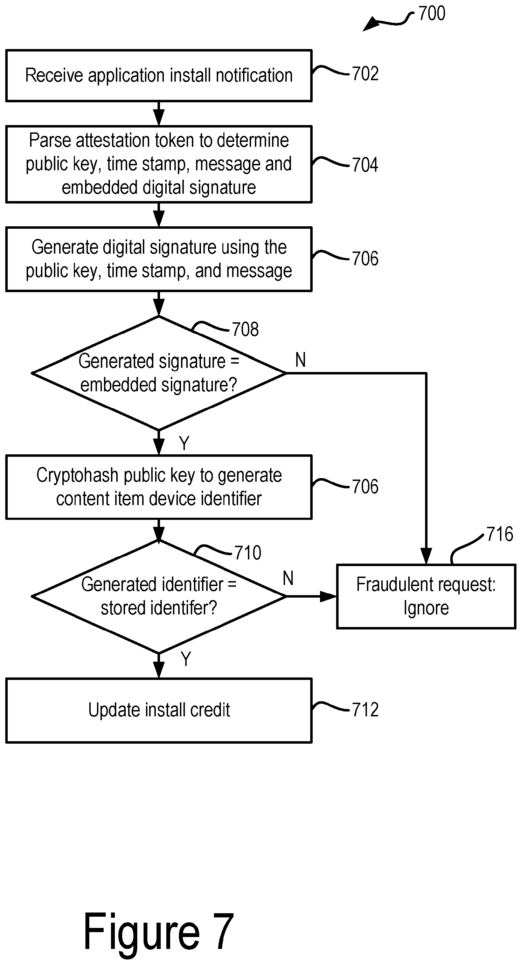

FIG. 7 shows a flow diagram of an example process 700 that can be implemented to mitigate fraudulent application install notifications received by the data processing system 110 shown in FIG. 1. As an example, the process 700 can be executed by the attribution component 150 of the data processing system 110. The process 700 includes receiving an application install notification from a client device 125. In particular, an application 208 or an SDK 210 can send the application install notification to the attribution component 150. For example, the user of the client device 125 may download an application to the client device in response to a content item rendered on the client device 125. After downloading the application, the user can install the application on the client device 125. The application can include an attribution SDK 210 that responsive to the application being installed, can send an installation notification to the attribution component 150 of the data processing system 110. The attribution SDK 210 can request the content item device identifier generator 202 to provide a content item device identifier. The content item device identifier generator 202 can generate a content item device identifier, or provide a stored content item device identifier to the attribution SDK 210 where the content item device identifier was generated using the public key of the client device 125. The attestation token generator 204 generates the attestation token with the payload message indicative of the application install notification. As an example, the attestation token generator 204 can generate an attestation token with the message payload including: {operation: "app install", "apk name": <apk name>}, where the operation "app install" indicates that the token was generated in response to a request for the content item device identifier for an application installation notification and where the 'apk name' can indicate the name of the application that has been installed on the client device 125.

The installation notification can allow the data processing system to attribute the installation of the application on the client device 125 to the content item that resulted in the user installing the application. To that end, the data processing system 110 can also store in the database 145 a list of content item device identifiers of client devices from which content item requests have been received. For example, if a browser application running on the client device 125 sends a valid and non-fraudulent content item request to the data processing system 110 (as discussed above in relation to FIG. 6), the content request component 130 can send a content item to the browser application for rendering on the client device 125. In addition, the content request component 130 can store the content item device identifier of the client device 125 in the database 145 with an indication that a content item was provided to the client device 125.

The process 700 includes receiving an application install notification from a client device (702). As mentioned above, an attribution SDK embedded in an application installed on the client device 125 can send an application install notification to the attribution component 150. The received application install notification can include the content item device identifier of the client device 125 and the attestation token generated by the attestation token generator 204. The attestation token can include a message payload that corresponds to the application installation notification, as discussed above. The steps 704-706 are similar to the steps 504-506 discussed above in relation to FIG. 5. That is, the attribution component 150 can verify that the digital signature is valid.

The process 700 includes generating content item device identifier based on a crypto-hash of the public key included in the attestation token (708). The process of generating the content item device identifier can be similar to that discussed above in relation to step 510 shown in FIG. 5. The process further includes determining whether the generated content item device identifier matches the content item device identifier stored in the database 145 (710). The content item device identifier stored in the database 145 can indicate that a content item associated with application installation has been previously sent to the client device 125. If the generated content item device identifier matches the stored content item device identifier, the attribution component 150 can determine that the application install notification is valid. On the other hand, if the attribution component 150 determines that the digital signature is not valid, or determines that the generated content item device identifier does not match the stored content item device identifier, or no content item device identifier matching the generated content item device identifier is stored in the database, the attribution component 150 can determine that the received application install notification is invalid. In some implementations, the attribution component 150 can determine that the received installation notification is valid based additionally on verifying the time stamp included in the installation notification and verifying the generated content item device identifier matches the content item device identifier received in the installation notification. Unless, all of the verifications are successful, the attribution component 150 can determine that the received installation notification is invalid. In this manner, the data processing system 110 can avoid processing invalid or fraudulent application installation notifications, thereby improving the performance.

The attribution component 150 can also verify fraudulent application install credit claims. In some implementations, when the attribution component 150 receives an installation notification from a client device 125, the attribution component 150 can query multiple content item networks to determine which ones of the content item networks served the content item which resulted in the installation of the application on the client device 125. The content item networks can include metadata in the content items that are served within applications. For example the metadata can include information on (1) whether the content item is an application installation content item, (2) if so, which application does the content item promote, and (3) the identity of the content item network that is associated with the content item and that can be credited with the installation of the application on the client device 125. When the content item is rendered on the client device 125, and/or when the user clicks on the content item, the content item (via an SDK inside application 208 that rendered the content item) can request the attestation token generator 204 to generate an attestation token with the message payload field 406 including (1) an event type indicating whether the content item was rendered or whether the content item was clicked on, (2) the metadata included in the content item, and (3) metadata of the impression itself, e.g., including a slot location on the display screen where the content item is displayed. The generated attestation token can be transmitted by the content item SDK to the content item network associated with the content item to indicate that the content item was rendered or clicked on. As an example, the attestation token can be sent to the content item network as a URL parameter of a rendering notification or a click notification.

The attribution component 150, in response to receiving the application installation notification, can send queries to multiple content item networks for claims of the installation of the application on the client device 125. In response, the attribution component 150 can receive attestation tokens that the content item networks received from their respective content items that experienced a rendering event or a click on event mentioned above. After receiving attestation tokens from one or more queried content item networks, the attribution component 150 can validate the attestation tokens by validating the signature, the content item device identifier, the time stamp and comparing the information in the message payload with the information received in the message payload of the application installation notification. The attribution component 150 can credit the content item network whose attribution token was valid. Fraudulent content item networks may also send attribution tokens. However, those attribution tokens will fail the validation determination carried out by the attribution component 150.

In some implementations, the operating system, and in particular the attestation token generator 204, can restrict the frequency with which attestation tokens are provided to a content item SDK. In some fraud scenarios, a fraudulent content item network's content item can request the attestation token generator 204 to generate an excessive number of attestation tokens. The attestation token generator 204 can be configured to prevent such a scenario by limiting the number of tokens provided to the content item SDK (e.g., at most one token per second). Further, the attestation token generator 204 can only generate tokens when the content item requesting the token as actually visible on the display screen of the client device, or has actually been clicked by the user. In this manner, fraudulent requests for the tokens can be reduced. In some instances, a content item can be permitted to promote at most one application. This limitation can further reduce fraudulent requests for tokens. In some implementations, the operating system of the client device 125 can employ on device machine learning models to verify the metadata. If the machine learning model can verify that the content item is indeed an application installation promotion content item (e.g., by analyzing a screenshot of a slot in which the content item is rendered), as well as the identity of the application promoted by the content item, the possibility of a fraudulent content item network can request application installation credit can be further reduced.

In some implementations, the attestation token generator 204 can generate the attestation token 400 in JSON format. Generating the attestation tokens 400 using the JSON format can provide flexibility and extendibility to the attestation token 400. For example, in instances where the data processing system 110 can support per domain-level opt-in capability to the users, the attestation token generator 204 can generate an attestation token having a message payload field 406 with the following data: {operation: "opt-in", Domain: "name_of_content_item_network", Opt-in-start: <start_date_time>, Opt-in-end: <end_date_time>}. Similarly, in instances where the data processing system supports domain specific opt-out capability to users, the message payload can include the following data: {operation: "opt-out", Domain: "name_of_content_item_network"}. In some implementations, the attestation token generator 204 can generate the attestation token 400 in a binary format, which can be significantly smaller than JSON format. Smaller attestation tokens generally require less computation power, network bandwidth and/or battery life to create, to transmit and to consume.

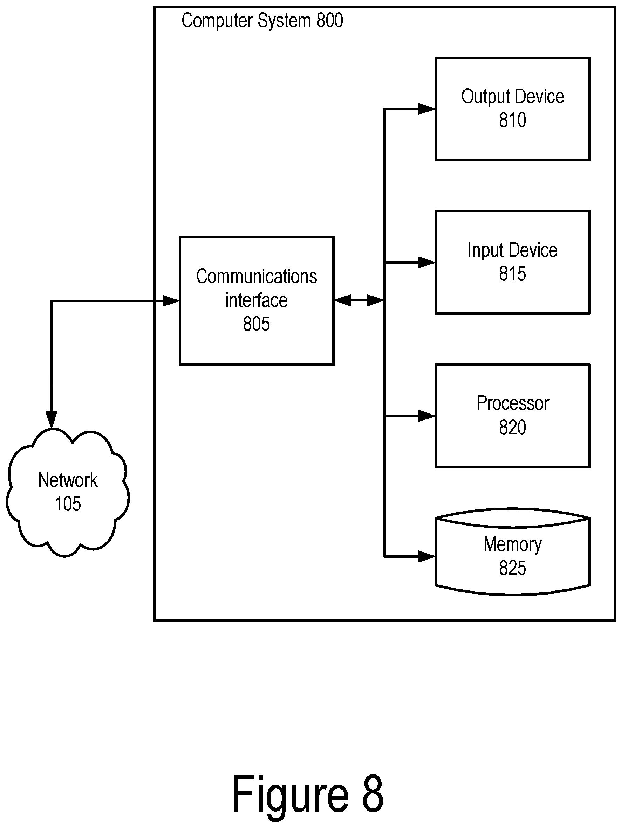

FIG. 8 shows the general architecture of an illustrative computer system 800 that may be employed to implement any of the computer systems discussed herein (including the system 110 and its components such as the content request component 130, the content selection component 135, and the attribution component 150) in accordance with some implementations. The computer system 800 can be used to provide information via the network 105 for display. The computer system 800 of FIG. 8 comprises one or more processors 820 communicatively coupled to memory 825, one or more communications interfaces 805, and one or more output devices 810 (e.g., one or more display units) and one or more input devices 815. The processors 820 can be included in the data processing system 110 or the other components of the system 110 such as the content request component 130 and the content selection component 135.

In the computer system 800 of FIG. 8, the memory 825 may comprise any computer-readable storage media, and may store computer instructions such as processor-executable instructions for implementing the various functionalities described herein for respective systems, as well as any data relating thereto, generated thereby, or received via the communications interface(s) or input device(s) (if present). Referring again to the system 110 of FIG. 1, the data processing system 110 can include the memory 825 to store information related to user information 165 and request logs 170, among others. The memory 825 can include the database 145. The processor(s) 820 shown in FIG. 8 may be used to execute instructions stored in the memory 825 and, in so doing, also may read from or write to the memory various information processed and or generated pursuant to execution of the instructions.

The processor 820 of the computer system 800 shown in FIG. 8 also may be communicatively coupled to or control the communications interface(s) 805 to transmit or receive various information pursuant to execution of instructions. For example, the communications interface(s) 805 may be coupled to a wired or wireless network, bus, or other communication means and may therefore allow the computer system 800 to transmit information to or receive information from other devices (e.g., other computer systems). While not shown explicitly in the system of FIG. 8, one or more communications interfaces facilitate information flow between the components of the system 800. In some implementations, the communications interface(s) may be configured (e.g., via various hardware components or software components) to provide a website as an access portal to at least some aspects of the computer system 800. Examples of communications interfaces 805 include user interfaces (e.g., web pages), through which the user can communicate with the data processing system 800.

The output devices 810 of the computer system 800 shown in FIG. 8 may be provided, for example, to allow various information to be viewed or otherwise perceived in connection with execution of the instructions. The input device(s) 815 may be provided, for example, to allow a user to make manual adjustments, make selections, enter data, or interact in any of a variety of manners with the processor during execution of the instructions. Additional information relating to a general computer system architecture that may be employed for various systems discussed herein is provided further herein.

Implementations of the subject matter and the operations described in this specification can be implemented in digital electronic circuitry, or in computer software embodied on a tangible medium, firmware, or hardware, including the structures disclosed in this specification and their structural equivalents, or in combinations of one or more of them. Implementations of the subject matter described in this specification can be implemented as one or more computer programs, i.e., one or more components of computer program instructions, encoded on computer storage medium for execution by, or to control the operation of, data processing apparatus. The program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can include a source or destination of computer program instructions encoded in an artificially-generated propagated signal. The computer storage medium can also be, or be included in, one or more separate physical components or media (e.g., multiple CDs, disks, or other storage devices).

The features disclosed herein may be implemented on a smart television module (or connected television module, hybrid television module, etc.), which may include a processing module configured to integrate internet connectivity with more traditional television programming sources (e.g., received via cable, satellite, over-the-air, or other signals). The smart television module may be physically incorporated into a television set or may include a separate device such as a set-top box, Blu-ray or other digital media player, game console, hotel television system, and other companion device. A smart television module may be configured to allow viewers to search and find videos, movies, photos and other content on the web, on a local cable TV channel, on a satellite TV channel, or stored on a local hard drive. A set-top box (STB) or set-top unit (STU) may include an information appliance device that may contain a tuner and connect to a television set and an external source of signal, turning the signal into content which is then displayed on the television screen or other display device. A smart television module may be configured to provide a home screen or top level screen including icons for a plurality of different applications, such as a web browser and a plurality of streaming media services, a connected cable or satellite media source, other web "channels", etc. The smart television module may further be configured to provide an electronic programming guide to the user. A companion application to the smart television module may be operable on a mobile computing device to provide additional information about available programs to a user, to allow the user to control the smart television module, etc. In alternate implementations, the features may be implemented on a laptop computer or other personal computer, a smartphone, other mobile phone, handheld computer, a tablet PC, or other computing device.

The operations described in this specification can be implemented as operations performed by a data processing apparatus on data stored on one or more computer-readable storage devices or received from other sources.

The terms "data processing apparatus", "data processing system", "user device" or "computing device" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. The content request component 130, the content selection component 135, and the attribution component 150 can include or share one or more data processing apparatuses, computing devices, or processors.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), for example. Devices suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), plasma, or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can include any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system such as the data processing system 110 can include clients and servers. For example, the data processing system 110 can include one or more servers in one or more data centers or server farms. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular implementations of the systems and methods described herein. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In some cases, the actions recited in the claims can be performed in a different order and still achieve desirable results. In addition, the processes depicted in the accompanying figures do not necessarily require the particular order shown, or sequential order, to achieve desirable results.

In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products. For example, the content request component 130 and the content selection component 135 can be part of the data processing system 110, a single module, a logic device having one or more processing modules, one or more servers, or part of a search engine.

Having now described some illustrative implementations and implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed only in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation, and references to "an implementation," "some implementations," "an alternate implementation," "various implementation," "one implementation" or the like are not necessarily mutually exclusive and are intended to indicate that a particular feature, structure, or characteristic described in connection with the implementation may be included in at least one implementation. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms.

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

The systems and methods described herein may be embodied in other specific forms without departing from the characteristics thereof. Although the examples provided herein relate to controlling the display of content of information resources, the systems and methods described herein can include applied to other environments. The foregoing implementations are illustrative rather than limiting of the described systems and methods. Scope of the systems and methods described herein is thus indicated by the appended claims, rather than the foregoing description.

## Claims

1. A method for processing content item operations, comprising:
receiving, by a data processing system (110), from a computing device (125), a content item communication, the content item communication including a first content item device identifier and an attestation token including a public key (402) associated with the computing device, an attestation token time stamp (404), a message payload (406), and a digital signature (408);
verifying, by the data processing system, the digital signature using the public key, the time stamp, and the message payload;
generating, by the data processing system, a second content item device identifier based on a crypto-hash of the public key;
determining, by the data processing system, that the second content item device identifier matches the first content item device identifier; and
processing, by the data processing system, responsive to verifying the digital signature and responsive to determining that the second content item device identifier matches the first content item device identifier, the content item communication based on the message payload.

2. The method of claim 1, wherein verifying the digital signature further comprises determining that the attestation token time stamp has a value within a predetermined range of temporal values.

3. The method of claim 1, further comprising the step of truncating the crypto-hash of the public key.

4. The method of claim 1, wherein processing the content item communication includes determining the message payload of the content item communication includes a wipe-out request.

5. The method of claim 4, further comprising removing data associated with the first content item device identifier responsive to determining the message payload includes the wipe-out request.

6. The method of claim 1, wherein processing the content item communication includes determining the message payload of the content item communication includes a content item request and a set of parameters associated with a request for a content item.

7. The method of claim 6, further comprising selecting, by the data processing system, a content item and sending the content item to a party associated with the received content item communication responsive to determining that the message payload includes the content item request.

8. The method of claim 1, wherein processing the content item communication includes determining the message payload of the content item communication includes an application installation notification indicating that an application has been installed on a client device.

9. The method of claim 8, further comprising updating, by the data processing system, a credit value associated with the content item responsive to determining the message payload includes the application installation notification.

10. The method of claim 1, wherein receiving a content item communication includes receiving the first content item device identifier having a length of 16 bytes.

11. A system (110) to process content item operations comprising one or more processors (820) configured to:
receive, from a computing device (125), a content item communication, the content item communication including a first content item device identifier and an attestation token including a public key (402) associated with the computing device, an attestation token time stamp (404), a message payload (406), and a digital signature (408);
verify the digital signature using the public key, the time stamp, and the message payload;
generate a second content item device identifier based on a crypto-hash of the public key;
determine that the second content item device identifier matches the first content item device identifier; and
process, responsive to verifying the digital signature and responsive to determining that the second content item device identifier matches the first content item device identifier, the content item communication based on the message payload.

12. The system of claim 11, wherein the one or more processors are configured to:
verify the digital signature and determine that the attestation token time stamp has a value within a predetermined range of temporal values.

13. The system of claim 11, wherein the one or more processors are configured to:
generate the second content item device identifier based off of a truncation of the crypto-hash of the public key.

14. The system of claim 11, wherein the one or more processors are configured to:
process the content item communication by determining the message payload of the content item communication includes a wipe-out request.

15. The system of claim 14, wherein the one or more processors are further configured to:
remove data associated with the first content item device identifier responsive to determining the message payload includes the wipe-out request.

## Patentansprüche

1. Verfahren zum Verarbeiten von Inhaltselement-Vorgängen, umfassend:
Empfangen durch ein Datenverarbeitungssystem (110), von einer Rechenvorrichtung (125), einer Inhaltselement-Kommunikation, wobei die Inhaltselement-Kommunikation eine erste Inhaltselement-Vorrichtungskennung und ein Bescheinigungs-Token beinhaltet, das einen öffentlichen Schlüssel (402), der mit der Rechenvorrichtung assoziiert ist, einen Bescheinigungs-Token-Zeitstempel (404), eine Nachrichten-Nutzlast (406) und eine digitale Signatur (408) beinhaltet;
Verifizieren, durch das Datenverarbeitungssystem, der digitalen Signatur unter Verwendung des öffentlichen Schlüssels, des Zeitstempels und der Nachrichten-Nutzlast;
Erzeugen, durch das Datenverarbeitungssystem, einer zweiten Inhaltselement-Vorrichtungskennung basierend auf einem kryptografischen Hash des öffentlichen Schlüssels;
Bestimmen, durch das Datenverarbeitungssystem, dass die zweite Inhaltselement-Vorrichtungskennung mit der ersten Inhaltselement-Vorrichtungskennung übereinstimmt; und
Verarbeiten, durch das Datenverarbeitungssystem, als Reaktion auf ein Verifizieren der digitalen Signatur und als Reaktion auf ein Bestimmen, dass die zweite Inhaltselement-Vorrichtungskennung mit der ersten Inhaltselement-Vorrichtungskennung übereinstimmt, der Inhaltselement-Kommunikation basierend auf der Nachrichten-Nutzlast.

2. Verfahren nach Anspruch 1, wobei ein Verifizieren der digitalen Signatur ferner ein Bestimmen umfasst, dass der Bescheinigungs-Token-Zeitstempel einen Wert innerhalb eines vorbestimmten Bereichs von Zeitwerten aufweist.

3. Verfahren nach Anspruch 1, ferner umfassend den Schritt eines Trunkierens des kryptografischen Hashs des öffentlichen Schlüssels.

4. Verfahren nach Anspruch 1, wobei ein Verarbeiten der Inhaltselement-Kommunikation ein Bestimmen beinhaltet, dass die Nachrichten-Nutzlast der Inhaltselement-Kommunikation eine Löschanforderung beinhaltet.

5. Verfahren nach Anspruch 4, ferner umfassend ein Entfernen von Daten, die mit der ersten Inhaltselement-Vorrichtungskennung assoziiert sind, als Reaktion auf ein Bestimmen, dass die Nachrichten-Nutzlast die Löschanforderung beinhaltet.

6. Verfahren nach Anspruch 1, wobei ein Verarbeiten der Inhaltselement-Kommunikation ein Bestimmen beinhaltet, dass die Nachrichten-Nutzlast der Inhaltselement-Kommunikation eine Inhaltselement-Anforderung und einen Satz von Parametern, die mit einer Inhaltselement-Anforderung assoziiert sind, beinhaltet.

7. Verfahren nach Anspruch 6, ferner umfassend ein Auswählen, durch das Datenverarbeitungssystem, eines Inhaltselements und ein Senden des Inhaltselements an einen Teilnehmer, der mit der empfangenen Inhaltselement-Kommunikation assoziiert ist, als Reaktion auf ein Bestimmen, dass die Nachrichten-Nutzlast die Inhaltselement-Anforderung beinhaltet.

8. Verfahren nach Anspruch 1, wobei ein Verarbeiten der Inhaltselement-Kommunikation ein Bestimmen beinhaltet, dass die Nachrichten-Nutzlast der Inhaltselement-Kommunikation eine Anwendungsinstallationsbenachrichtigung beinhaltet, die angibt, dass eine Anwendung auf einer Client-Vorrichtung installiert worden ist.

9. Verfahren nach Anspruch 8, ferner umfassend ein Aktualisieren, durch das Datenverarbeitungssystem, eines Guthabenwerts, der mit dem Inhaltselement assoziiert ist, als Reaktion auf ein Bestimmen, dass die Nachrichten-Nutzlast die Anwendungsinstallationsbenachrichtigung beinhaltet.

10. Verfahren nach Anspruch 1, wobei ein Empfangen einer Inhaltselement-Kommunikation ein Empfangen der ersten Inhaltselement-Vorrichtungskennung beinhaltet, die eine Länge von 16 Bytes aufweist.

11. System (110) zum Verarbeiten von Inhaltselement-Vorgängen, umfassend einen oder mehrere Prozessoren (820), die zu Folgendem konfiguriert sind:
Empfangen, von einer Rechenvorrichtung (125), einer Inhaltselement-Kommunikation, wobei die Inhaltselement-Kommunikation eine erste Inhaltselement-Vorrichtungskennung und ein Bescheinigungs-Token beinhaltet, das einen öffentlichen Schlüssel (402), der mit der Rechenvorrichtung assoziiert ist, einen Bescheinigungs-Token-Zeitstempel (404), eine Nachrichten-Nutzlast (406) und eine digitale Signatur (408) beinhaltet;
Verifizieren der digitalen Signatur unter Verwendung des öffentlichen Schlüssels, des Zeitstempels und der Nachrichten-Nutzlast;
Erzeugen einer zweiten Inhaltselement-Vorrichtungskennung basierend auf einem kryptografischen Hash des öffentlichen Schlüssels;
Bestimmen, dass die zweite Inhaltselement-Vorrichtungskennung mit der ersten Inhaltselement-Vorrichtungskennung übereinstimmt; und
Verarbeiten, als Reaktion auf ein Verifizieren der digitalen Signatur und als Reaktion auf ein Bestimmen, dass die zweite Inhaltselement-Vorrichtungskennung mit der ersten Inhaltselement-Vorrichtungskennung übereinstimmt, der Inhaltselement-Kommunikation basierend auf der Nachrichten-Nutzlast.

12. System nach Anspruch 11, wobei der eine oder die mehreren Prozessoren zu Folgendem konfiguriert sind:
Verifizieren der digitalen Signatur und Bestimmen, dass der Bescheinigungs-Token-Zeitstempel einen Wert innerhalb eines vorbestimmten Bereichs von Zeitwerten aufweist.

13. System nach Anspruch 11, wobei der eine oder die mehreren Prozessoren zu Folgendem konfiguriert sind:
Erzeugen der zweiten Inhaltselement-Vorrichtungskennung basierend auf einer Trunkierung des kryptografischen Hashs des öffentlichen Schlüssels.

14. System nach Anspruch 11, wobei der eine oder die mehreren Prozessoren zu Folgendem konfiguriert sind:
Verarbeiten der Inhaltselement-Kommunikation durch Bestimmen, dass die Nachrichten-Nutzlast der Inhaltselement-Kommunikation eine Löschanforderung beinhaltet.

15. System nach Anspruch 14, wobei der eine oder die mehreren Prozessoren ferner zu Folgendem konfiguriert sind:
Entfernen von Daten, die mit der ersten Inhaltselement-Vorrichtungskennung assoziiert sind, als Reaktion auf ein Bestimmen, dass die Nachrichten-Nutzlast die Löschanforderung beinhaltet.

## Revendications

1. Procédé permettant le traitement d'opérations d'élément de contenu, comprenant :
la réception, par un système de traitement de données (110), en provenance d'un dispositif informatique (125), d'une communication d'élément de contenu, la communication d'élément de contenu comprenant un premier identifiant de dispositif d'élément de contenu et un jeton d'attestation comprenant une clé publique (402) associée au dispositif informatique, une estampille temporelle de jeton d'attestation (404), une charge utile de message (406) et une signature numérique (408) ;
la vérification, par le système de traitement de données, de la signature numérique à l'aide de la clé publique, de l'estampille temporelle et de la charge utile de message ;
la génération, par le système de traitement de données, d'un second identifiant de dispositif d'élément de contenu basé sur un hachage cryptographique de la clé publique ;
la détermination, par le système de traitement de données, que le second identifiant de dispositif d'élément de contenu correspond au premier identifiant de dispositif d'élément de contenu ; et
le traitement, par le système de traitement de données, en réponse à la vérification de la signature numérique et en réponse à la détermination que le second identifiant de dispositif d'élément de contenu correspond au premier identifiant de dispositif d'élément de contenu, de la communication d'élément de contenu sur la base de la charge utile de message.

2. Procédé selon la revendication 1, ladite vérification de la signature numérique comprenant en outre la détermination que l'estampille temporelle de jeton d'attestation possède une valeur comprise dans une plage prédéfinie de valeurs temporelles.

3. Procédé selon la revendication 1, comprenant en outre l'étape de troncation du hachage cryptographique de la clé publique.

4. Procédé selon la revendication 1, ledit traitement de la communication d'élément de contenu comprenant la détermination que la charge utile de message de la communication d'élément de contenu comprend une demande d'effacement.

5. Procédé selon la revendication 4, comprenant en outre la suppression des données associées au premier identifiant de dispositif d'élément de contenu en réponse à la détermination que la charge utile de message comprend la demande d'effacement.

6. Procédé selon la revendication 1, ledit traitement de la communication d'élément de contenu comprenant la détermination que la charge utile de message de la communication d'élément de contenu comprend une demande d'élément de contenu et un ensemble de paramètres associés à une demande pour un élément de contenu.

7. Procédé selon la revendication 6, comprenant en outre la sélection, par le système de traitement de données, d'un élément de contenu et l'envoi de l'élément de contenu à une partie associée à la communication d'élément de contenu reçue en réponse à la détermination que la charge utile de message comprend la demande d'élément de contenu.

8. Procédé selon la revendication 1, ledit traitement de la communication d'élément de contenu comprenant la détermination que la charge utile de message de la communication d'élément de contenu comprend une notification d'installation d'application indiquant qu'une application a été installée sur un dispositif client.

9. Procédé selon la revendication 8, comprenant en outre la mise à jour, par le système de traitement de données, d'une valeur de crédit associée à l'élément de contenu en réponse à la détermination que la charge utile de message comprend la notification d'installation d'application.

10. Procédé selon la revendication 1, ladite réception d'une communication d'élément de contenu comprenant la réception du premier identifiant de dispositif d'élément de contenu possédant une longueur de 16 octets.

11. Système (110) pour traiter les opérations d'éléments de contenu comprenant un ou plusieurs processeurs (820) configurés pour :
recevoir, en provenance d'un dispositif informatique (125), une communication d'élément de contenu, la communication d'élément de contenu comprenant un premier identifiant de dispositif d'élément de contenu et un jeton d'attestation comprenant une clé publique (402) associée au dispositif informatique, une estampille temporelle de jeton d'attestation (404), une charge utile de message (406) et une signature numérique (408) ;
vérifier la signature numérique à l'aide de la clé publique, de l'estampille temporelle et de la charge utile de message ;
générer un second identifiant de dispositif d'élément de contenu basé sur un hachage cryptographique de la clé publique ;
déterminer que le second identifiant de dispositif d'élément de contenu correspond au premier identifiant de dispositif d'élément de contenu ; et
traiter, en réponse à la vérification de la signature numérique et en réponse à la détermination que le second identifiant de dispositif d'élément de contenu correspond au premier identifiant de dispositif d'élément de contenu, la communication d'élément de contenu sur la base de la charge utile de message.

12. Système selon la revendication 11, ledit ou lesdits processeurs étant configurés pour :
vérifier la signature numérique et déterminer que l'estampille temporelle de jeton d'attestation possède une valeur comprise dans une plage prédéfinie de valeurs temporelles.

13. Système selon la revendication 11, ledit ou lesdits processeurs étant configurés pour :
générer le second identifiant de dispositif d'élément de contenu sur la base d'une troncature du hachage cryptographique de la clé publique.

14. Système selon la revendication 11, ledit ou lesdits processeurs étant configurés pour : traiter la communication d'élément de contenu en déterminant la charge utile de message de la communication d'élément de contenu qui comprend une demande d'effacement.

15. Système selon la revendication 14, ledit ou lesdits processeurs étant en outre configurés pour : supprimer les données associées au premier identifiant de dispositif d'élément de contenu en réponse à
la détermination que la charge utile de message comprend la demande d'effacement.
